(19) Europäisches Patentamt

European Patent Office

Office européen des brevets

(11) **EP 1 188 780 B1**

(12) **EUROPÄISCHE PATENTSCHRIFT**

(45) Veröffentlichungstag und Bekanntmachung des Hinweises auf die Patenterteilung:
**21.09.2005 Patentblatt 2005/38**

(51) Int Cl.$^7$: **C08G 18/36**, C08L 21/00, C08J 3/24, C08G 18/87, C08G 18/28

(21) Anmeldenummer: **01120633.1**

(22) Anmeldetag: **30.08.2001**

(54) **Kieselgelhaltige Kautschukcompounds mit Organosilciumverbindungen als Compoundiermittel**

Silica gel containing rubber compounds with organic siliciumcompounds as compounding agent

Composés de caoutchouc contenant du gel de silice avec composés de silice organiques comme agent de mélange

(84) Benannte Vertragsstaaten:
**DE FR GB IT LU NL**

(30) Priorität: **13.09.2000 DE 10045166**

(43) Veröffentlichungstag der Anmeldung:
**20.03.2002 Patentblatt 2002/12**

(73) Patentinhaber: **Rhein Chemie Rheinau GmbH 68219 Mannheim (DE)**

(72) Erfinder:
• **Herpich, Rüdiger, Dr.**
**68163 Mannheim (DE)**
• **Früh, Thomas, Dr.**
**67061 Ludwigshafen (DE)**
• **Heiliger, Ludger, Dr.**
**67433 Neustadt (DE)**
• **Schilling, Kurt**
**68723 Schwetzingen (DE)**

(74) Vertreter: **Pettrich, Klaus-Günter et al c/o LANXESS Deutschland GmbH LIP-IPR 51369 Leverkusen (DE)**

(56) Entgegenhaltungen:
DE-A- 2 319 160          DE-C- 863 403
US-A- 3 015 636          US-A- 4 278 587

**Beschreibung**

Gebiet der Erfindung:

Die Erfindung betrifft neue organische Siliciumnetzwerke, deren Herstellverfahren und Verwendung in kieselsäurehaltigen Kautschukmischungen und hieraus hergestellte Vulkanisate.

Durch den Zusatz organischer Siliciumverbindungen zu kieselsäurehaltigen Kautschukmischungen wird eine Verbesserung der mechanischen und dynamischen Eigenschaften erreicht.

Stand der Technik:

Die Herstellung und Verwendung von alkoxysilanhaltigen Verbindungen in Kautschukmischungen zur Verbesserung der mechanischen und dynamischen Eigenschaften der Vulkanisate ist bekannt und in zahlreichen Patenten beschrieben.

Beispielsweise verbessert sich bei der Verwendung von 3,3-Bis(triethoxysilylpropyl)tetrasulfid in kieselsäurehaltiger Kautschukmischungen die Nassrutschfestigkeit bei gleichzeitiger Verringerung des Rollwiderstands gegenüber russgefüllten Laufflächenmischungen. Beim Vulkanisationsprozess werden durch die Verwendung $SiO_2$-haltiger Füllstoffe zusammen mit 3,3-Bis(triethoxysilylpropyl)tetrasulfid kovalente Kautschuk-Füllstoff-Bindungen aufgebaut, die für einen Abriebwiderstand sorgen, der dem von Laufflächenrussen vergleichbar ist (U. Görl, *Gummi, Fasern, Kunststoffe*, **1998**, *51*, 416-421).

Ein typischer Vertreter dieser Verbindungsklasse ist 3,3-Bis(triethoxysilylpropyl)tetrasulfid.

Zwar werden durch die Verwendung von 3,3-Bis(triethoxysilylpropyl)tetrasulfid wichtige gummitechnologische Eigenschaften, wie die bereits genannten dynamischen Eigenschaften verbessert, erkauft wird dies jedoch mit einer verglichen zu rußgefüllten Kautschukmischungen wesentlich aufwendigeren Mischungsherstellung und Verarbeitung. (H.-D. Luginsland "Processing of the Organo Silane Si 69" *The International Rubber Chemicals and Compounding Conference*, 22nd - 23nd Nov. 1999, Antwerpen, Belgien).

So sind silicagefüllte Laufflächenmischungen, die das dem Stand der Technik entsprechende 3,3-Bis(triethoxysilylpropyl)tetrasulfid enthalten, extrem scorchgefährdet und dürfen bei der Mischungsherstellung auf keinen Fall die Temperaturgrenze von 160 °C überschreiten.

Weiterhin ist die tatsächliche Ausnutzung des hohen Silananteils für die Kopplungsreaktion mit der Kautschukmatrix gering, da ein großer Teil des niedermolekularen Silans in den durch die Mikroporösität bedingten Kavitäten verschwindet und dort für die Ankopplung an die Kautschukmatrix nicht erreichbar ist. Dies führt dazu, dass die kostspieligen Silane in hohen molaren Mengen eingesetzt werden müssen. Dies wiederum verteuert das Füllstoffsystem, d.h. Silica plus Silan enorm, verglichen zu einem Rußsystem, das nicht aktiviert werden muß.

Dadurch führen silicagefüllte Reifenmischungen zu Einschränkungen beim Mischverfahren, der einen Produktivitätsabfall im gesamten Herstellungsprozess des Reifenbauers bewirkt, zum anderen verteuert sich der Rohstoffpreis der Mischung durch die niedermolekulare Silankomponente drastisch.

Es bestand daher die Aufgabe Füllstoffaktivatoren zufinden, die zum einen auf einer günstigen Rohstoffbasis fußen, zum anderen bessere molare Ausnutzung der Kopplungsreaktion zur Kautschukmatrix aufweisen und schließlich den Produktivitätsabfall beim Herstellprozess verglichen zum rußgefüllten Systemen kompensieren.

Gegenstand der Erfindung ist ein Netzwerk aus mit Schwefelbrücken vernetzten Estern aus einer oder mehreren ungesättigten aromatischen oder aliphatischen Hydroxycarbonsäuren und einem oder mehreren aromatischen oder aliphatischen Polyolen, wobei das Netzwerk einen Schwefelgehalt im Bereich von 0,2 Gew.-% bis 17 %, bevorzugt 0,5 % bis 10 % aufweist, und wobei

a) die Hydroxycarbonsäure(n) jeweils 1, 2 oder 3, bevorzugt 1 bis 2, olefinische Doppelbindungen und 1, 2 oder 3, bevorzugt 1 bis 2, Hydroxygruppen oder Hydroxy- und Isocyanatgruppen besitzt/besitzen,

b) die Polyolkomponente(n) jeweils 1 bis 6, bevorzugt 1 bis 3, Kohlenstoffatome und 1 bis 6, bevorzugt 1 bis 3, Hydroxygruppen und gegebenenfalls Isocyanat-Gruppen besitzt/besitzen,

c) die (Thio-)Urethan- oder Harnstoffsubstituenten besitzen, welche ihrerseits einen oder mehrere endständige Silansubstituenten gemäß Formel (I)

$$R^1R^2R^3Si\text{-}X\text{-(Thio-)Urethan-/Harnstoffgruppe} \qquad (I)$$

besitzen
worin in Formel (I)

R$^1$, R$^2$, R$^3$     gleich oder verschieden sind und C$_1$-C$_{18}$-Alkyl oder C$_1$-C$_{18}$ Alkoxy bedeuten und

X     für lineare, verzweigte oder cyclische, gegebenenfalls ungesät- tigte C$_1$-C$_{12}$-Alkylenreste steht.

Die Kohlenstoffatome der Hydroxycarbonsäurekomponente(n) und Polyolkomponente(n) können hierbei eine geradkettige, verzweigte oder ringförmige Anordnung aufweisen.

Die Schwefelbrücken sind bevorzugt S$_x$-Brücken, wobei der Schwefel hierbei eine geradkettige, verzweigte oder ringförmige Anordnung aufweisen kann.

Die Carbonsäurekomponente besitzt im Bereich von 10 bis 20, bevorzugt 14 bis 18 Kohlenstoffatome.

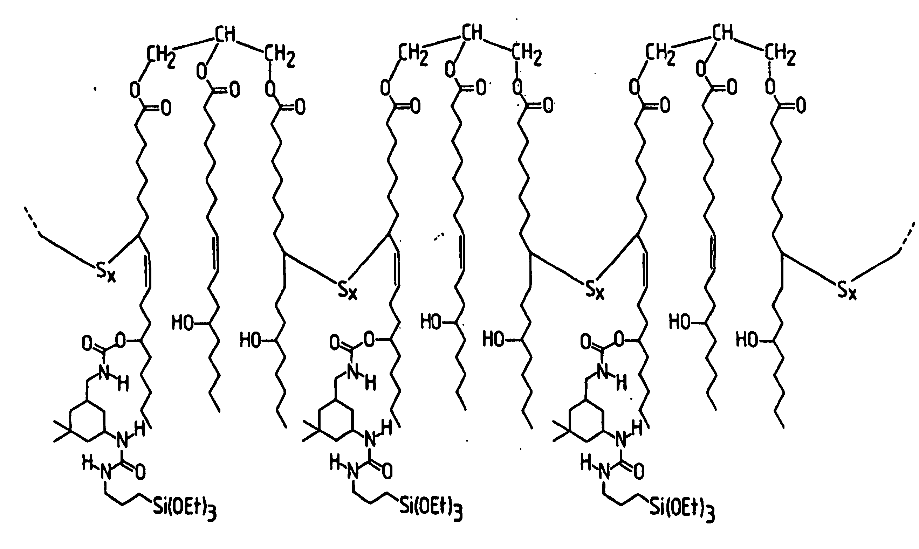

Ein besonders bevorzugtes Netzwerk ist in Abbildung 1 wiedergegeben.

Die Synthese der Netzwerke kann auf jede dem Fachmann bekannte Weise erfolgen.

Die Synthese erfolgt jedoch bevorzugt dadurch, dass man

a) einen entsprechenden Ester mit im Bereich von 0,5 bis 25 %, bevorzugt 0,5 % bis 10 % Schwefel in Gegenwart von einem oder mehreren primären Aminen bei 120 bis 180°C umsetzt, anschließend

b) die Mischung mit im Bereich von 0,1 bis 1,0 Mol eines Diisocyanats bezogen auf den OH-Gehalt des nun geschwefelten Esters, vorzugsweise bei 20 bis 150°C, umsetzt, und anschließend,

c) die Mischung mit einem Silan gemäß Formel (II),

$$R^1R^2R^3Si\text{-}X\text{-}Q \hspace{4cm} (II)$$

umsetzt, worin

X     für lineare, verzweigte oder cyclische, gegebenenfalls ungesät- tigte C$_1$-C$_{12}$-Alkylenreste und

Q     für SH, NH$_2$, N=C=O oder N=C=S steht.

Die Herstellung der Ester als Ausgangsmaterial erfolgt durch Umsetzung von ungesättigten aromatischen oder aliphatischen Hydroxycarbonsäuren und aromatischen oder aliphatischen Polyolen, worin die Hydroxycarbonsäurekomponente im Bereich von 10 bis 20, bevorzugt 14 bis 18 Kohlenstoffatome besitzen, die eine geradkettige, verzweigte oder ringförmige Anordnung aufweisen können und die jeweils im Bereich von 1 bis 3, bevorzugt 1 bis 2 olefinische Doppelbindungen und Hydroxygruppen besitzen. Die Polyolkomponente weist vorteilhaft im Bereich von 1 bis 6 bevorzugt 1 bis 3 Kohlenstoffatome in geradkettiger, verzweigter oder ringförmiger Anordnung auf und besitzt vorteilhaft im Bereich von 1 bis 6 bevorzugt 1 bis 3 Hydroxygruppen,

Die Ester werden mit im Bereich von 0,5 bis 25 Gew.% Schwefel unter Zuhilfenahme primärer Amine als Katalysatoren bei 120 bis 180°C reagiert.

Dazu werden die Ester aus ungesättigten aromatischen oder aliphatischen. Hydroxycarbonsäuren und aromatischen oder aliphatischen Polyolen mit im Bereich von 0,5 bis 25 Gew.% Schwefel und vorteilhaft im Bereich von 0,05 bis 2 Gew.% primärem Amin bezogen auf die Summe aller Inhaltsstoffe versetzt und auf im Bereich von 120 bis 180°C vorteilhaft über im Bereich von 1 bis 12 h erhitzt.

Besonders bevorzugt sind Reaktionsbedingungen, bei denen im Bereich von 1 bis 5 Gew.% Schwefel mit im Bereich von 0,05 bis 1 Gew.% primärem Amin bei im Bereich von 130 bis 160 °C im Bereich von 1 und 5 h umgesetzt werden.

Ganz besonders bevorzugt sind Reaktionsbedingungen, bei denen im Bereich von 1 bis 2 Gew.% Schwefel mit im Bereich von 0,05 bis 0,3 Gew.% primäres Amin bei im Bereich von 140 bis 160°C im Bereich von 1 und 3 h umgesetzt werden.

Die so erhaltenen geschwefelten Ester sind in der Regel ohne weitere Aufreinigung oder Modifizierung direkt für die weitere Reaktion einsetzbar.

Das Molverhältnis von Ester zu Diisocyanat beträgt vorteilhaft im Bereich von 1,5:1 bis 0,5:1, bevorzugt 1,1:1 bis 0,9:1.

Die Umsetzung wird in der Regel bei einer Temperatur im Bereich von 20 bis 90°C, bevorzugt 40-80°C durchgeführt.

Als Diisocyanate kommen aliphatische wie beispielsweise Isophorondiisocyanat (IPDI), Hexan-1,6-diisocyanat (HDI) oder aromatische wie 2,6- und/oder 2,4-Toluylen-diisocyanat (TDI) oder 2,2'-Diphenylmethan-diisocyanat (MDI) in Frage.

Vorteilhaft, sobald das Reaktionsgemisch einen NCO-Gehalt aufweist, der der Hälfte der unreagierten Mischung aufweist, erfolgt die Zugabe einer Amino, bzw. Mercaptosilanverbindung gemäß Formel (II), wobei für die Isocyanat - Thiol Addition gegebenenfalls ein zinnhaltiger Katalysators in einer Konzentration von 0,1 bis 2 %, bevorzugt 0,1 bis 1 % bezogen auf den gesamten Reaktionsansatz verwendet werden kann.

Bei der Reaktion zwischen schwefelverbrücktem Ester und Silan (II) beträgt das molare Verhältnis von schwefelverbrücktem Ester zu Silan vorteilhaft im Bereich von 1,5:1 bis 0,5:1, bevorzugt 1,1:1 bis 0,9:1 bezogen jeweils auf die funktionellen Gruppen beider Reaktanten.

Die Reaktion erfolgt bevorzugt lösungsmittelfrei.

Die Temperatur sollte, wenn ohne einen Katalysator gearbeitet wird im Bereich von 20 bis 90°C, bevorzugt 40 bis 80°C betragen. Die Umsetzung wird vorteilhaft so lange durchgeführt, bis ein bis ein NCS, bzw. NCO-Gehalt von <0,1 % bestimmt werden kann.

Vorteilhaft ist häufig aber die Verwendung eines zinnhaltigen Katalysators für die Additionsreaktion in einer Konzentration im Bereich von 0,1 bis 2 %, bevorzugt 0,1 bis 1 % bezogen auf den gesamten Reaktionsansatz. Die Temperaturen liegen in diesem Fall vorteilhaft im Bereich von 0 bis 60°C, bevorzugt bei 20 bis 50°C. Die Umsetzung wird auch in diesem Falle vorteilhaft so lange durchgeführt, bis ein NCS, bzw. NCO-Gehalt von < 0,1% bestimmt werden kann.

Die Verknüpfung zwischen Silan und schwefelhaltigen Estern ungesättigter aromatischer oder aliphatischer Hydroxycarbonsäuren kann auch vorteilhaft über die Reaktion eines Isocyanato bzw. Isothiocyanatosilans mit schwefelhaltigen Estern ungesättigter aromatischer oder aliphatischer Hydroxycarbonsäuren erfolgen.

Weiterhin betrifft die Erfindung Kautschukmischungen enthaltend mindestens ein erfindungsgemäßes Netzwerk (a), mindestens einen doppelbindungshaltigen Kautschuk (b) und mindestens einen siliciumhaltigen Füllstoff (c), wobei gegebenenfalls zusätzlich Kautschukhilfsmittel und weitere Füllstoffe enthalten sein können.

Der Anteil an (a) beträgt vorteilhaft im Bereich von 1-20, besonders bevorzugt 5 bis 10 Gew.-Teile, der Anteil an (b) 100 Gew.-Teile, und der Anteil an (c) vorteilhaft im Bereich von 50-90, bevorzugt 70-90 Gew.-Teile.

Als doppelbindungshaltiger Kautschuk (b) geeignet sind Kautschuke, die nach DIN/ISO 1629 als R-Kautschuke bezeichnet werden. Diese Kautschuke haben in der Hauptkette eine Doppelbindung. Hierzu gehören z. B.:

| | |
|---|---|
| NR: | Naturkautschuk |
| SBR: | Styrol/Butadienkautschuk |
| BR: | Polybutadienkautschuk |
| NBR: | Nitrilkautschuk |
| IIR: | Butylkautschuk |
| HNBR: | hydrierter Nitrilkautschuk |
| SNBR | Styrol/Butadien/Acrylnitril-Kautschuk |
| CR: | Polychloropren |
| XSBR: | carboxylierter Styrol/Butadienk-Kautschuk |
| XNBR: | carboxylierter Butadien/Acrylnitril-Kautschuk |
| ENR: | epoxydierter Naturkautschuk |
| ESBR: | epoxydierter Styrol/Butadienkautschuk |

Weiterhin sind aber auch Kautschuke geeignet, die nach DIN/ISO 1629 M-Kautschuke sind und neben der gesättigten Hauptkette Doppelbindungen in Seitenketten aufweisen. Hierzu gehört z. B. EPDM.

Bevorzugt sind NR, BR, SBR, IIR und EPDM.

Als siliciumhaltiger Füllstoff (c) eignet sich jeder dem Fachmann bekannte siliciumhaltige Füllstoff. Insbesondere seinen genannt:

1. hochdisperse Kieselsäure, hergestellt z. B. durch Fällungen von Lösungen von Silikaten oder Flammhydrolyse von Siliciumhalogeniden mit spezifischen Oberflächen im Bereich von 5 bis 1000, vorzugsweise 20 bis 400 $m^2g^{-1}$ (BET-Oberfläche gemäss DIN 66 131) und Primärteilchengrössen im Bereich von 5 bis 400 nm (bestimmbar z.B. nach Cornillaut, Appl. Opt. 1972, 11, 265). Die Kieselsäuren können gegebenenfalls auch als Mischoxide mit anderen Metalloxiden, wie Al-, Mg-, Ca-, Ba-, Zn- und Ti-Oxiden vorliegen;

2. synthetische Silikate, wie Aluminiumsilikat, Erdalkalisilikat, wie Magnesiumsilikat oder Calciumsilikat mit BET-Oberflächen im Bereich von 20 bis 400 $m^2g^{-1}$ und Primärteilchendurchmessem im Bereich von 5 bis 400 nm;

3. natürliche Silikate, wie Kaolin, Zeolithe und andere natürlich vorkommende Kieselsäuren;

4. Glasfasern und Glasfaserprodukte (Latten, Stränge oder Mikroglaskugeln).

Bevorzugt sind hochdisperse Kieselsäuren und synthetische, sowie natürliche Silikate.

Die erfindungsgemässen Kautschukmischungen können zusätzliche weitere Kautschukhilfsmittel und Füllstoffe enthalten.

Besonders geeignete zusätzliche Füllstoffe zur Herstellung der erfindungsgemäßen Kautschukmischungen und -vulkanisate sind:

1. Ruße. Die hierbei zu verwendenden Russe sind nach dem Flammruß-, Furnace- oder Gasrußverfahren hergestellt und besitzen BET-Oberflächen im Bereich von 20 bis 200 $m^2g^{-1}$ wie z. B. SAF-, ISAF-, IISAF-, HAF-, FEF-, oder GPF-Ruße;

2. Metalloxide, wie Zinkoxyd, Calciumoxyd, Magnesiumoxyd, Aluminiumoxyd;

3. Metallcarbonate, wie Calciumcarbonat, Magnesiumcarbonat, Zinkcarbonat;

4. Metallsulfate, wie Calciumsulfat, Bariumsulfat;

5. Metallhydroxyde, wie Aluminiumhydroxyd und Magnesiumhydroxyd;

6. Themoplastfasern (Polyamid, Polyester, Aramid)

Die genannten Füllstoffe können allein oder im Gemisch eingesetzt werden. In einer besonders bevorzugten Ausführung des Verfahrens werden im Bereich von 70 bis 85 Gew.-Teile siliciumhaltiger Füllstoff (c), gegebenenfalls zusammen mit im Bereich von 5 bis 10 Gew.-Teilen Ruß jeweils bezogen auf 100 Gew.-Teile Kautschuk (b), eingesetzt.

Die erfindungsgemäßen Kautschukmischungen können darüber hinaus noch übliche Kautschukhilfsmittel enthalten, wie Reaktionsbeschleuniger, Alterungsschutzmittel, Wärmestabilisatoren, Lichtschutzmittel, Ozonschutzmittel, Verarbeitungshilfsmittel, Weichmacher, Tackifier, Treibmittel, Farbstoffe, Pigmente, Wachs, Streckmittel, organische Säuren, Verzögerer, Metalloxyde, sowie Füllstoffaktivatoren wie Triethanolamin, Polyethylenglycol, Hexantriol oder anderen, die in der Gummiindustrie bekannt sind.

Die Kautschukhilfsmittel werden in der Regel in üblichen Mengen, die sich u. a. nach dem Verwendungszweck richten, eingesetzt. Übliche Mengen sind hierbei Mengen im Bereich von 0,1 bis 50 Gewichtsprozent, bezogen auf eingesetzte Mengen an Kautschuk (b).

Um zu vernetzbaren Kautschukmischungen zu gelangen, die eine weiterer Bestandteil der Erfindung sind, müssen zu den erfindungsgemäßen Kautschukmischungen Vernetzer zugegeben werden.

Als Vernetzer können sämtliche den Fachmann bekannte Vernetzungssysteme eingesetzt werden. Es eignen sich beispielsweise Schwefel, Schwefelspender, Peroxide oder sonstige Vemetzungsmittel, wie beispielsweise Diisopropenylbenzol, Divinylbenzol, Divinylether, Divinylsulfon, Diallylphthalat, Triallylcyanurat, 1,2-Polybutadien, N,N'-m-Phenylen-maleimid und/oder Triallyltrimellitat.

Darüber hinaus kommen in Betracht die Acrylate und Methacrylate von mehrwertigen, vorzugsweise 2- bis 4-wertigen $C_2$- bis $C_{10}$-Alkoholen, wie Ethylenglycol, Propandiol, 1,2-Butandiol, Hexandiol, Polyethylenglycol mit im Bereich von 2 bis 20, vorzugsweise im Bereich von 2 bis 8 Oxyethyleneinheiten, Neopentylglycol, Bisphenol-A, Glycerin, Trimethylolpropan, Pentaerythrit, Sorbit mit ungesättigten Polyestern aus aliphatischen Di- und Polyolen sowie Maleinsäure, Fumarsäure, und/oder Itaconsäure.

Die erfindungsgemässen vernetzbaren Kautschukmischungen können darüber hinaus Vulkansationsbeschleuniger enthalten. Beispiele für geeignete Vulkanisationsbeschleuniger sind Mercaptobenzthiazole, Mercaptosulfenamide, Guanidine, Thiurame, Dithiocarbamate, Thioharnstoffe und Thiocarbonate sowie Dithiophosphate.

Die Vulkanisationsbeschleuniger, Schwefel und Schwefelspender oder Peroxide oder weitere Vemetzungsmittel wie beispielsweise dimeres 2,4-Toluylendiisocyanat oder 1,4-Bis-1-ethoxyhydrochinon werden in der Regel in Mengen im Bereich von 0,1 bis 40 Gewichtsprozent, bevorzugt 0,1 bis 10 Gewichtsprozent bezogen auf die gesamte Menge an Kautschuk (b) eingesetzt. Die Vulkanisation der erfindungsgemässen vernetzbaren Kautschukmischungen kann bei Temperaturen im Bereich von 100 bis 250°C, bevorzugt im Bereich von 130 bis 180°C, gegebenenfalls unter Druck im Bereich von 10 bis 200 bar erfolgen.

Ein weiterer Gegenstand der Erfindung ist ein Mischungsverfahren für die erfindungsgemäßen Kautschukmischungen oder die erfindungsgemäßen vernetzbaren Kautschukmischungen, dadurch gekennzeichnet, dass man die Komponeneten bei Temperaturen oberhalb von 130°C, vorzugsweise im Bereich von 140 bis 200°C, besonders bevorzugt im Bereich von 150°C bis 180°C in einem Mischorgan mischt. Hierfür eignen sich besonders Innenmischer oder Mischextruder.

Hierbei werden gegebenenfalls zusätzlich Kautschukhilfsmittel und weitere Füllstoffe verwendet werden.

Der Zusatz weiterer Mischungsbestandteile zur erfindungsgemäßen Kautschukmischung oder zur erfindungsgemäßen vernetzbaren Kautschukmischung kann im erfindungsgemäßen Mischverfahren oder auch in einem nachfolgenden Verarbeitungsschritt in üblichen Aggregaten, wie beispielsweise Walzen, Kalandern oder Extrudem. Bevorzugte Mischtemperaturen liegen im Bereich von 50 bis 180°C.

Aus den erfindungsgemässen vernetzbaren Kautschukmischungen können durch Vulkanisation entsprechende Vulkanisate hergestellt werden, die sich zur Herstellung von Formkörpern eignen, z. B. für die Herstellung von Kabelmänteln, Schläuchen, Treibriemen, Förderbändern, Walzenbelägen, Reifen, insbesondere Reifenlaufflächen, Schuhsohlen, Dichtungsringen und Dämpfungselementen sowie Membranen, besonders bevorzugt für die Herstellung von Reifenlaufflächen.

**Beispiele:**

**Beispiel 1:** Schwefelung und anschließende Funktionalisierung von Ricinusöl

| Einwaage | 200,0 g Ricinusöl | |
|---|---|---|
| | 4,2 g Schwefel | |
| | 0,2 g Primene 81R® | |
| Ausführung | Den Ansatz **2h** unter $N_2$ bei **150°C** gerührt. Das Rizinusöl färbt sich dunkel. | |
| | ASTM-Farbe: 6,5 | |
| | Nach 3-tägigem Stehen bei RT war das Produkt klar. | |
| | Anschließend davon | |
| | Einwaage: 106,4g | = 0,1 Mol |
| | 23,3g Isopropyldiisocyanat, NCO-Geh.: 39,7 % | = 0,11 Mol |
| | Misch-NCO-Gehalt = 7,1 % | |
| Ausführung | Zu der Vorlage von geschwefeltem Rizinusöl wurde unter Rühren bei 50°C innerhalb | |
| | 10 min. das IPDI zugegeben. | |
| | Es wurden **6h** bei **50°C** gerührt. | NCO-Gehalt: 3,4 % |
| | Bei Raumtemperatur wurde zum obigen Ansatz | |
| | 24,4 g 3-Aminopropyltriethoxysilan = 105 % auf NCO-Gehalt innerhalb 30 min. zugegeben. Exotherme Reaktion; kühlen! Nachreaktion = 2h bei Raumtemperatur. | |
| | Bei RT war das Produkt eine klare, braune, viskose, fließende Masse. | |
| | NCO-Gehalt: 0,3% (überschüssiges "Amino-Silan") | |
| Analytik | GPC: Polymerkettenverteilung, geringe Anteile einer niedermole-kularen Substanz, die sich durch Rkt. Wasser im Rizinusöl + Diisocyanat erklären läßt. | |

**Schlußfolgerung:**

Praktische und einfache Synthesereaktion, Eintopf-Mehrstufenreaktion.

**Beispiel 2:**

Anwendungstechnische Untersuchung einer erfindungsgemäßen Kautschukmischung.

| Rezeptur 1 | | |
|---|---|---|
| Mischungsbestandteil | Mischung 1 | Mischung 2 |
| | phr | phr |
| Buna CB 24 | 30 | 30 |
| Buna VSL 5025-1 | 96 | 96 |
| Vulkasil S | 80 | 80 |
| ZnO aktiv | 3 | 3 |

(fortgesetzt)

| Rezeptur 1 | | |
|---|---|---|
| Mischungsbestandteil | Mischung 1 | Mischung 2 |
| Stearinsäure | 2 | 2 |
| Vulkanox 4010 NA | 1,5 | 1,5 |
| Vulkanox HS | 1 | 1 |
| Aktiplast ST | 4 | 4 |
| Naftolen ZD | 10 | 10 |
| Antilux 654 | 1 | 1 |
| 3,3-Bis(triethoxysilylpropyl)tetrasulfid | 6,4 | |
| Produkt aus Beispiel 1 | - | 6,4 |
| Schwefel | 1,7 | 1,7 |
| Vulkacit D | 2 | 2 |
| Vulkacit CZ | 1,7 | 1,7 |
| Rhenocure SDT/S | - | 2 |
| **Dosierung Silanderivate [mol]** | **5,94*10-2** | **1,06*10-2** |
| Auswurftemperatur | 145 | 155 |
| Anzahl Mischstufen | 3 | 3 |
| 3,3-Bis(triethoxysilylpropyl)tetrasulfid | 539 | |
| Produkt aus Beispiel 1 [g/mol] | 3000 | |
| **Mischungsprüfung** | | |
| Mooneyviskosität ML 1+4, 100°C, DIN 53523, [ME] | 54. | 55 |
| Mooney Scorch, 120 °C, DIN 53523 | | |
| t5 [min] | 27,2 | 24,7 |
| t35 [min] | 36,8 | 29,2 |
| Rheometerprüfung, 160 °C, DIN 53529 | | |
| $t_{10\%}$ [min] | 4,5 | 3,9 |
| $t_{90\%}$ [min] | 10,2 | 9,2 |
| $t_{95\%}$ [min] | 12,1 | 9,9 |
| Drehmomentdifferenz [Nm] | 38,6 | 37,8 |
| **Vulkanisatprüfung nach 160°C/t$_{95\%}$** | | |
| Rückprallelastizität, 23 °C, DIN 53512, [%] | 35 | 37 |
| Rückprallelastizität, 70 °C, DIN 53512, [%] | 53 | 54 |
| Härte Shore A, 23 °C, DIN 53505 | 68 | 63 |
| Modul 25 %, 23°C, DIN 53504, [MPa] | 1,15 | 1,18 |
| Modul 100 %, 23°C, DIN 53504, [MPa] | 3,1 | 2 |
| Modul 300 %, 23°C, DIN 53504, [MPa] | 12 | 7,5 |
| Zugfestigkeit, 23°C, DIN 53504, [MPa] | 17,9 | 16,1 |
| Bruchdehnung, 23°C, DIN 53504, [%] | 451 | 524 |
| Modul 300 / Modul 100 | 3,9 | 3,8 |
| Druckverformungsrest, 1 Tag, 70°C, [%] | 24 | 22 |
| Abrieb, 23°C, DIN 53516, [mm3] | 96 | 108 |
| Viskoelastische Eigenschaften, DIN 53513 | | |
| tan d, 0°C | 0,41 | 0,419 |
| tan d, 70°C | 0,135 | 0,139 |
| Buna® CB 24: Bayer AG, Polybutadien, Mooney Viskosität 38 - 48 (1+4, 100°C) | | |
| Buna® VSL 5025-1: Bayer AG, SBR-Kautschuk, (Mooney Viskosität 50 (ML 1+4, 100°C) | | |
| Vulkasil® S: Bayer AG, aktive Kieselsäure | | |

(fortgesetzt)

| Rezeptur 1 | | |
|---|---|---|
| Mischungsbestandteil | Mischung 1 | Mischung 2 |
| ZnO aktiv: Bayer AG | | |
| Vulkanox® 4010 NA: Bayer AG, N-Isopropyl-N'-phenyl-p-phenylendiamin | | |
| Vulkanox® HS: Bayer AG, oligomerisiertes 2,2,4-Trimethyl-1,2-dihydro-chinolin | | |
| Aktiplast® ST: Rhein Chemie Rheinau GmbH, Gemisch aus Kohlenwasserstoffen, Zinkseifen und Füllstoffen | | |
| Naftolen ZD: Chemetall GmbH, aromatisches Weichmacheröl | | |
| Antilux® 654: Rhein Chemie Rheinau GmbH, Lichtschutzwachs | | |
| Vulkacit® D: Bayer AG, Diphenylguanidin | | |
| Vulkacit® CZ: Bayer AG, N-Cyclohexyl-2-benzthiazylsulfenamid | | |
| Rhenocure® SDT: Rhein Chemie Rheinau GmbH, Schwefelspender | | |

Aus diesem Beispiel ist ersichtlich, daß bei Einsatz des erfindungsgemäßen polymeren organischen Silans die molare Menge weniger als 1/5 der des 3,3-Bis(triethoxysilylpropyl)tetrasulfids entspricht, aber auf diese geringere molare Dosierung bei erhöhter Mischtemperatur vergleichbare gummitechnologische Daten ermöglicht, was die Ausschußrate in der Fertigung senkt und damit die Produktivität des Gesamtprozesses verbessert.

**Patentansprüche**

1. Netzwerk aus mit Schwefelbrücken vernetzten Estern aus einer oder mehreren ungesättigten aromatischen oder aliphatischen Hydroxycarbonsäuren und einem oder mehreren aromatischen oder aliphatischen Polyolen, wobei das Netzwerk einen Schwefelgehalt im Bereich von 0,2 Gew.-% bis 17% aufweist, und wobei

   a) die Hydroxycarbonsäure(n) jeweils 1, 2 oder 3 olefinische Doppelbindungen und Hydroxygruppen oder Hydroxy- und Isocyanatgruppen besitzt/besitzen,
   b) die Polyolkomponente(n) jeweils 1 bis 6 Kohlenstoffatome und 1 bis 6 Hydroxygruppen und gegebenenfalls Isocyanat-Gruppen besitzt/besitzen,
   c) die (Thio-)Urethan- oder Harnstoffsubstituenten besitzen, welche ihrerseits einen oder mehrere endständige Silansubstituenten gemäß Formel (I)

$$R^1R^2R^3Si-X-(Thio-)Urethan-/Harnstoffgruppe \hspace{2cm} (I)$$

   besitzen worin in Formel (I)

   $R^1,R^2,R^3$    gleich oder verschieden sind und $C_1$-$C_{18}$-Alkyl oder $C_1$-$C_{18}$-Alkoxy bedeuten und

   X    für lineare, verzweigte oder cyclische, gegebenenfalls ungesättigte $C_1$-$C_{12}$-Alkylenreste steht.

2. Netzwerk gemäss Anspruch 1, **dadurch gekennzeichnet, dass** der Schwefelgehalt im Bereich von 0,5 Gew.-% bis 10 % beträgt.

3. Netzwerk gemäss Anspruch 1 oder 2, **dadurch gekennzeichnet, dass** die Hydroxycarbonsäure(n) im Bereich von 10 bis 20 Kohlenstoffatome besitzt/besitzen.

4. Verfahren zur Herstellung der Verbindungen gemäß einem der Ansprüche 1 bis 3, **dadurch gekennzeichnet, dass** man

   a) einen entsprechenden Ester mit 0,5 bis 25 Gew.-% Schwefel unter in Gegenwart von einem oder mehreren primären Amine bei 120 bis 180°C umsetzt, anschließend

b) die Mischung mit im Bereich von 0,1 bis 1,0 Mol eines Diisocyanats bezogen auf den OH-Gehalt des geschwefelten Esters umsetzt und anschließend

c) die Mischung mit einem Silan gemäß Formel (IIa),

$$R^1R^2R^3Si\text{-}X\text{-}Q \tag{IIa}$$

umsetzt, worin

X     für lineare, verzweigte oder cyclische, gegebenenfalls ungesättigte $C_1$-$C_{12}$-Alkylenreste und

Q     für SH, $NH_2$, N=C=O oder N=C=S steht.

5.   Kautschukmischungen, enthaltend

a) wenigstens ein erfindungsgemäßes Netzwerk gemäss einem der Ansprüche 1-3

b) wenigstens einen doppelbindungshaltigen Kautschuk und

c) wenigstens einen siliciumhaltigen Füllstoff,

wobei gegebenenfalls zusätzlich Kautschukhilfsmittel und weitere Füllstoffe enthalten sein können.

6.   Kautschukmischungen gemäß Anspruch 5, wobei der Anteil an (a) im Bereich von 1 bis 20 Gew.-Teile, der Anteil an (b) 100 Gew.-Teile und der Anteil an (c) im Bereich von 50 bis 90 Gew.-Teile beträgt.

7.   Mischungen nach Anspruch 5 oder 6, **dadurch gekennzeichnet, dass** der Kautschuk (b) ausgewählt wird aus der Gruppe bestehend aus NR, BR, SBR und IIR oder Mischungen von 2 oder mehr Gruppenmitgliedern.

8.   Mischungen nach einem der Ansprüche 5-7, **dadurch gekennzeichnet, dass** der Füllstoff (c) ausgewählt wird aus der Gruppe bestehend aus Kieselsäuren, Siliciumdioxid, Kieselgele oder natürliche oder synthetische Silikate oder Mischungen von 2 oder mehr Gruppenmitgliedern.

9.   Mischverfahren für Kautschukmischungen gemäss einem der Ansprüche 5 bis 8, **dadurch gekennzeichnet, dass** die Kautschukmischungen bei Temperaturen oberhalb 155°C, in einem Mischorgan durchgeführt werden.

10.   Mischverfahren gemäss Anspruch 9, **dadurch gekennzeichnet, dass** als Mischorgan ein Innenmischer oder Mischextruder verwendet wird

11.   Verwendung einer Kautschukmischung gemäss einem der Ansprüche 5 bis 8 zur Herstellung von Formkörpern aller Art.

**Claims**

1.   A network comprising esters of one or more unsaturated aromatic or aliphatic hydroxycarboxylic acids and one or more aromatic or aliphatic polyols, crosslinked with sulphur bridges, wherein said network comprises a sulphur content in the range from 0.2 wt% to 17%, and wherein

a) the hydroxycarboxylic acid(s) each comprise 1, 2 or 3 olefinic double bonds and hydroxyl groups or hydroxyl and isocyanate groups,

b) the polyol component(s) each comprise 1 to 6 carbon atoms and 1 to 6 hydroxyl groups and optionally isocyanate groups,

c) the network comprises (thio)urethane or urea substituents, which in turn have one or more terminal silane substituents according to formula (I)

$$R^1R^2R^3Si\text{-}X\text{-}(thio)urethane/urea\ group \tag{I}$$

wherein in formula (I)

$R^1$, $R^2$, $R^3$ are the same or different and denote $C_1$-$C_{18}$ alkyl or $C_1$-$C_{18}$ alkoxy and

X represents linear, branched or cyclic, optionally unsaturated $C_1$-$C_{12}$ alkylene radicals.

2. Network according to Claim 1, **characterized in that** the sulphur content is in the range from 0.5 wt% to 10%.

3. Network according to Claim 1 or 2, **characterized in that** the hydroxycarboxylic acid(s) comprise(s) 10 to 20 carbon atoms.

4. Process for the production of the compounds according to any one of Claims 1 to 3, **characterized in that** it comprises

a) reacting a corresponding ester with 0.5 to 25 wt% sulphur in the presence of one or more primary amines at 120 to 180°C to form a mixture, then

b) reacting the mixture with 0.1 to 1.0 mol of a diisocyanate relative to the OH content of the sulphurized ester to form a further mixture, and

c) reacting the further mixture with a silane according to formula (IIa),

$$R^1R^2R^3\text{Si-X-Q} \qquad\qquad \text{(IIa)}$$

wherein

X stands for linear, branched or cyclic, optionally unsaturated $C_1$-$C_{12}$ alkylene radicals and
Q stands for SH, $NH_2$, N=C=O or N=C=S.

5. Rubber compounds comprising

a) at least one network of the invention according to any one of Claims 1 to 3,
b) at least one double bond-containing rubber and
c) at least one silicon-containing filler,

and optionally additional rubber additives and other fillers.

6. Rubber compounds according to Claim 5, whereby the content of (a) is in the range from 1 to 20 parts by weight, the content of (b) is 100 parts by weight and the content of (c) is in the range from 50 to 90 parts by weight.

7. Rubber compounds according to Claim 5 or 6, **characterized in that** the rubber (b) is selected from the group consisting of NR, BR, SBR and IIR or mixtures of 2 or more members of the group.

8. Rubber compounds according to any one of Claims 5-7, **characterized in that** the filler (c) is selected from the group consisting of silicas, silicon dioxide, silica gels or natural or synthetic silicates or mixtures of 2 or more members of the group.

9. Compounding process for rubber compounds according to any one of Claims 5 to 8, **characterized in that** the rubber compounds are compounded in a mixing device at temperatures above 155°C.

10. Compounding process according to Claim 9, **characterized in that** the mixing device is an internal mixer or a compounding extruder.

11. Use of a rubber compound according to any one of Claims 5 to 8 for producing moulded articles of any type.

**Revendications**

1. Réseaux d'esters, réticulés par des ponts de soufre, d'un ou plusieurs acides hydroxycarboxyliques aromatiques ou aliphatiques insaturés et d'un ou plusieurs polyols aromatiques ou aliphatiques, le réseau ayant une teneur en soufre dans l'intervalle de 0,2 à 17 % en poids, et

a) le ou les acides hydroxycarboxyliques contiennent chacun 1, 2 ou 3 doubles liaisons oléfiniques et groupes hydroxy ou groupes hydroxy et isocyanates,
b) le ou les composants polyols contiennent chacun 1 à 6 atomes de carbone et 1 à 6 groupes hydroxy et le cas échéant des groupes isocyanate,
c) ils portent des substituants (thio)-uréthane ou urée qui portent eux-mêmes en position terminale un ou plusieurs silanes substituants de formule (I)

$$\text{groupe } R^1R^2R^3Si\text{-}X\text{-(thio)uréthane/urée} \qquad (I)$$

dans laquelle

$R^1$, $R^2$, $R^3$, ayant des significations identiques ou différentes représentent chacun un groupe alkyle en $C_1$-$C_{18}$ ou alcoxy en $C_1$-$C_{18}$ et

X représente un groupe alkylène linéaire, ramifié ou cyclique, éventuellement insaturé, en $C_1$-$C_{12}$.

2. Réseau selon revendication 1, **caractérisé en ce que** la teneur en soufre se situe dans l'intervalle de 0,5 à 10 % en poids.

3. Réseau selon revendication 1 ou 2, **caractérisé en ce que** le ou les acides hydroxycarboxyliques contiennent de 10 à 20 atomes de carbone

4. Procédé pour la préparation des composés selon l'une des revendications 1 à 3, **caractérisé en ce que**

a) on fait réagir un ester approprié avec 0,5 à 25 % en poids de soufre en présence d'une ou plusieurs amines primaires à une température de 120 à 180°C, puis
b) on fait réagir le mélange avec une proportion de 0,1 à 1,0 mol d'un diisocyanate, par rapport à la teneur en groupes OH de l'ester soufré, puis,
c) on fait réagir le mélange avec un silane de formule (IIa),

$$R^1R^2R^3Si\text{-}X\text{-}Q \qquad (IIa)$$

dans laquelle

X représente un groupe alkylène linéaire, ramifié ou cyclique, éventuellement insaturé en $C_1$-$C_{12}$, et
Q représente SH, $NH_2$, N=C=O ou N=C=S.

5. Compositions de caoutchouc contenant

a) au moins un réseau selon l'invention selon l'une des revendications 1 à 3,
b) au moins un caoutchouc à doubles liaisons, et
c) au moins une matière de charge siliciée, et le cas échéant en outre des produits auxiliaires pour caoutchouc et d'autres matières de charge.

6. Compositions de caoutchouc selon revendication 5, pour lesquelles la proportion de (a) se situe dans l'intervalle de 1 à 20 parties en poids, la proportion de (b) est de 100 parties en poids et la proportion de (c) se situe dans l'intervalle de 50 à 90 % en poids.

7. Compositions selon la revendication 5 ou 6, **caractérisées en ce que** le caoutchouc (b) est choisi dans le groupe consistant en les caoutchoucs NR, BR, SBR et IIR ou les mélanges de deux ou plusieurs d'entre eux.

8. Compositions selon l'une des revendications 5 à 7, **caractérisées en ce que** la matière de charge (c) est choisie dans le groupe consistant en les silices, le dioxyde de silicium, les gels de silice ou les silicates naturels ou synthétiques ou les mélanges de deux ou plusieurs d'entre eux.

9. Procédé de mélange pour les compositions de caoutchouc selon l'une des revendications 5 à 8, **caractérisé en ce que** l'on procède au mélange à des températures supérieures à 155°C dans un appareil de mélange.

10. Procédé de mélange selon la revendication 9, **caractérisé en ce que** l'on utilise en tant qu'appareil de mélange un mélangeur interne ou une extrudeuse de mélange.

11. Utilisation d'une composition de caoutchouc selon l'une des revendications 5 à 8 pour la fabrication d'objets moulés de tous types.